# EUROPÄISCHE PATENTSCHRIFT

(11) **EP 0 781 306 B1**
(45) Veröffentlichungstag und Bekanntmachung des Hinweises auf die Patenterteilung: **22.04.1998**
(21) Anmeldenummer: 95932716.4
(22) Anmeldetag: 12.09.1995
(51) Int. Cl.: C08J 3/22, C08L 23/02

(54) **MASTERBATCH ZUR HERSTELLUNG VON BIAXIAL ORIENTIERTEN POLYALKYLENFOLIEN, VERFAHREN ZU SEINER HERSTELLUNG UND SEINE VERWENDUNG**
MASTER BATCH FOR USE IN THE PRODUCTION OF BI-AXIALLY ORIENTED POLYALKYLENE FILMS
MELANGE-MAITRE UTILISE POUR LA FABRICATION DE FEUILLES DE POLYALKYLENE A ORIENTATION BIAXIALE ET SON PROCEDE DE FABRICATION

(30) Priorität: 16.09.1994 DE 4433166
(43) Veröffentlichungstag der Anmeldung: 02.07.1997
(73) Patentinhaber: A. SCHULMAN PLASTICS N.V., 2880 Bornem (BE)
(72) Erfinder: JANSSENS, Marcel, B-9200 Dendermonde (BE)
(74) Vertreter: Godemeyer, Thomas, Dr.
(86) Internationale Anmeldenummer: EP9503575
(87) Internationale Veröffentlichungsnummer: WO9609336

(56) Entgegenhaltungen:
- EP-A- 0 242 055
- EP-A- 0 361 280
- EP-A- 0 454 420
- LU-A- 67 676
- DATABASE WPI Section Ch, Week 9433 Derwent Publications Ltd., London, GB; Class A17, AN 94-269578 & JP,A,06 200 092 (MITSUBISHI PETROCHEMICAL) , 19.Juli 1994

## Beschreibung

Die Erfindung betrifft ein Masterbatch zur Herstellung von biaxial orientierten Polyalkylenfolien, ein Verfahren zur Herstellung dieses Masterbatches, die Verwendung dieses Masterbatches und biaxial orientierte, koextrudierte Mehrschichtpolyalkylenfolien, die dieses Masterbatch enthalten.

In den letzten Jahren haben biaxial orientierte Polyalkylenfolien zunehmend an Bedeutung gewonnen. Sie werden vorwiegend als Verpackungsmaterial für Klarsichtverpackungen verwendet und sind hochglänzend, kratzfest und dauerhaft transparent. Sie sind daher ein guter Ersatzstoff für Zellophan als Verpackungsmaterial.

Diese Folien können auch als koextrudierte Mehrschichtfolien hergestellt werden, die aus einer Kernschicht und einer Außenschicht bestehen. Besonders bei der Herstellung dieser Mehrschichtfolien kommt es jedoch häufig zu Problemen. So besteht die Außenschicht im allgemeinen aus Polyalkylen-Homopolymer für Folien, die zum Drucken oder Laminieren verwendet werden oder aus Polyalkylen-Random-Copolymeren für heißsiegelfähige Folien, die zum Beispiel metallisiert werden.

Derartige Folien besitzen hohe Film-zu-Film- und Film-zu-Metall-Reibungskoeffizienten, was dazu führt, daß die Folien aneinander haften und bei Druck an der Oberfläche zum verkleben neigen. Dadurch wird es schwierig, sie in automatischen Verpackungseinrichtungen zu verwenden.

Aus dem Stand der Technik ist es bekannt, diese Nachteile dadurch zu vermeiden, daß man dem Polymer, das verarbeitet werden soll, spezielle Additive hinzusetzt, die diese Effekte verhindern. Dazu gehören Verbindungen wie natürliche und/oder synthetische Siliciumoxide, Talkum, Calciumcarbonat und Silikate, die als hohlförmige Teilchen oder als Pulver eingesetzt werden. Dies wird ebenfalls beschrieben in EP 0361280 AZ.

JP-A- 06 200 092 beschreibt einen biaxial orientierten Polypropylen film, der als Antiblockmittel kugelförmige Silikatteilchen enthält.

Der Zusatz dieser Additive hat jedoch den Nachteil, daß die optischen Eigenschaften der aus dem Polymer hergestellten Folien vermindert werden. Insbesondere führt die Zugabe der Additive häufig zu einer Verminderung des Glanzes und einer erhöhten Trübung der Folien. Ein weiterer Nachteil ist, daß es durch die schlechte Verteilung der Füllstoffe in der Polyalkylenmatrix und die mangelhafte Bindung der Füllstoffe an die Polyalkylenmatrix beim Schneiden ("slitting") der Folie zu pulverförmigen Ablagerungen auf der Folie und auf der Schneidvorrichtung kommt. Dies verschlechtert einerseits die Eigenschaften der Folie ganz erheblich und erschwert andererseits auch die Verarbeitung der Folie.

Es ist daher die technische Aufgabe der Erfindung, besser geeignete Füllstoffe und ein entsprechendes Additiv zur Verfügung zu stellen, das die oben beschriebenen Nachteile nicht aufweist und insbesondere zu einer besseren Verteilung und Bindung der Füllstoffe an die Polyalkylenmatrix führt.

Diese Aufgabe wird gelöst durch ein Masterbatch zur Herstellung von biaxial orientierten Polyalkylenfolien, der in einer Matrix aus Polyalkylen-Homopolymer oder -Copolymer bezogen auf die Gesamtmenge an Masterbatch 1 bis 50 Gew%, vorzugsweise 1 bis 10 Gew%, kugelförmige, massive Silikatteilchen und gegebenenfalls 0,1 bis 15 Gew%, vorzugsweise 10 Gew%, eines oberflächenmodifizierenden Reagenzes, das mit der Oberfläche des Silikats reagiert und die Haftfestigkeit zwischen Silikat und Polyalkylen verbessert, enthält. In einer bevorzugten Ausführungsform ist die Matrix für das Masterbatch ein Polypropylen-Homopolymer oder ein Polypropylen-Random-Copolymer.

Unter dem Begriff Masterbatch ist im Rahmen der vorliegenden Erfindung eine Stammischung zu verstehen, insbesondere eine granulatförmige, staubfreie Zusammensetzung aus den oben beschriebenen Komponenten Polyalkylen als Matrix, kugelförmige, massive Silikatteilchen sowie gegebenenfalls ein oberflächenmodifizierendes Reagenz. Ein derartiges Masterbatch wird bei der Herstellung der biaxial orientierten Folien oder anderen Folien zusammen mit dem Kunststoffrohstoff eingesetzt und zusammen mit diesem zum Produkt extrudiert.

Als oberflächenmodifizierende Reagenzien kommen grundsätzlich solche in Frage, die mit der Oberfläche des Silikats reagieren und so die Haftfestigkeit zwischen Silikat und Polyalkylen verbessern. Besonders geeignet sind Polypropylen oder Polyethylen niedriger oder hoher Dichte mit 0,5 bis 2 Gew% gepfropftem Maleinsäureanhydrid oder Ethylen-Acrylsäure-Copolymer. Unter "pfropfen" wird das Öffnen der Polymerkette und das anschließendes Binden der Kettenenden an Maleinsäureanhydrid verstanden.

Als Silikate können nur solche im Sinne der vorliegenden Erfindung verwendet werden die als kugelförmige, massive Teilchen ausgebildet sind. Der Teilchendurchmesser der massiven, kugelförmigen Silikatteilchen liegt in bevorzugter Weise bei 2 bis 4 µm. Natrium-Calcium-Aluminiumsilikat und Kalium-Calcium-Aluminiumsilikat sowie reines Aluminiumsilikat werden als bevorzugte Silikate verwendet.

Mit dem erfindungsgemäßen Masterbatch können bei der Herstellung von biaxial orientierten Polyalkylenen, insbesondere Polypropylenfolien und Polyethylenfolien, hervorragende Resultate erzielt werden. Diese sind auf die hervorragende Antiblockwirkung des erfindungsgemäßen Masterbatches, die günstigen Schlupfeigenschaften und verbesserten optischen Eigenschaften der daraus hergestellten Folie sowie einer verbesserten Adhäsion des anorganischen Additivs zur Polyalkylenmatrix in den hergestellten Folien zurückzuführen.

Die Herstellung des erfindungsgemäßen Masterbatches erfolgt auf Vorrichtungen die üblicherweise zum Compoundieren verwendet werden. Beispielsweise seien genannt: Einschnecken- oder Zweischnecken-Extruder oder eine Mischvorrichtung des Banbury-Typs.

Zur Herstellung des Masterbatches wird das Polyalkylen-Homopolymer oder Polyalkylen-Copolymer mit den kugelförmigen Silikaten und gegebenenfalls dem oberflächenmodifizierenden Mittel in die Compoundiervorrichtung gegeben, geschmolzen und compoundiert, anschließend abgekühlt und granuliert. Während des Compoundierens reagiert das bevorzugt zugegebene oberflächenmodifizierende Reagenz mit der Oberfläche der Silikatpartikel und verstärkt damit die Bindung zwischen der kugelförmigen, anorganischen Oberfläche des Silikatmaterials und der organischen, polymeren Matrix. Das Ergebnis dieser Reaktion ist eine hervorragende Verteilung und Haftung der anorganischen Silikatpartikel an der organischen Polypropylenmatrix. Wenn das so hergestellte erfindungsgemäße Masterbatch als Antiblockmittel in den Außenschichten von biaxial orientierten Polyalkylenfolien verwendet wird, können biaxial orientierte Polyalkylenfolien hergestellt werden mit gegenüber dem Stand der Technik weit verbesserten Eigenschaften insbesondere bezüglich Trübung, Glanz, Reibungskoeffizient und Antiblockaktivität.

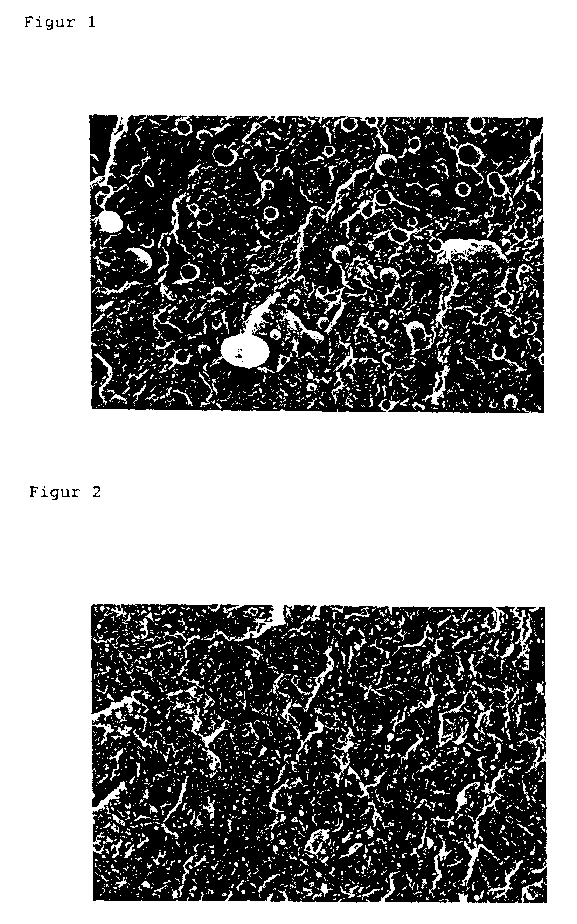

Anhand der beigefügten Figuren sollen die Vorteile des erfindungsgemäßen Masterbatches erläutert werden. Figur 1 zeigt ein Masterbatch mit kugelförmigen Natrium-Calcium-Aluminiumsilikatpartikeln ohne ein oberflächenmodifizierendes Additiv nach dem Schneiden.

Figur 2 zeigt ein erfindungsgemäßes Masterbatch mit Natrium-Calcium-Aluminiumsilikat mit einem oberflächenmodifizierenden Additiv nach dem Schneiden. Die Aufnahmen wurden mit einem Rasterelektronenmikroskop aufgenommen, nachdem ein Granulatkörnchen des jeweiligen Masterbatches geschnitten wurde und die Oberfläche unter dem Rasterelektronenmikroskop untersucht wurde. Aus den Figuren ist zu erkennen, daß der Masterbatch ohne das oberflächenmodifizierende Additiv kugelförmige Partikel zeigt, die nicht in der Polymermatrix verteilt und gebunden sind. Diese Partikel können beim Schneiden der Folien als pulverförmige Rückstände auftreten. Das in Figur 2 gezeigte erfindungsgemäße Masterbatch dagegen besitzt sehr gute Oberflächeneigenschaften und zeigt eine nahezu perfekte Bindung und Verteilung der kugelförmigen Partikel in der Matrix. Kugelförmige ungebundene Partikel sind in Figur 2 nicht zu erkennen. Dadurch kommt es nicht zum Auftreten von pulverförmigen Rückständen, wenn die mit diesen Masterbatches gefertigten Folien geschnitten werden.

Auf diese Art und Weise kann das erfindungsgemäße Masterbatch zur Herstellung von biaxial orientierten Polyalkylenfolien verwendet werden.

Ein weiterer Gegenstand der Erfindung ist eine biaxial orientierte, koextrudierte Mehrschichtpolyalkylenfolie mit einer Dicke von 5 bis 200 µm, die aus einer Kern- und einer oder mehrerer Außenschichten besteht und in der Außenschicht das erfindungsgemäße Masterbatch enthält. Vorzugsweise besitzt die Außenschicht eine Dicke von 0,2 bis 5 µm. Das erfindungsgemäße Masterbatch ist in dieser Außenschicht in einer Menge von 1 bis 10 Gew% enthalten. Die Außenschicht besteht besonders bevorzugt aus Polypropylen-Homopolymer oder Polypropylen-Random-Copolymer.

Bei der Verwendung der Antiblock-Masterbatche, die aus dem Stand der Technik bekannt sind, entstehen im allgemeinen Folien mit begrenzten optischen Eigenschaften. Wenn gewöhnliche kugelförmige Aluminiumsilikate verwendet werden, entstehen pulverförmige Rückstände auf ihren Oberflächen und auf den Schneidvorrichtungen für diese Folien.

Mit dem erfindungsgemäßen Masterbatch, das Natrium-Calcium-Aluminiumsilikat als Antiblockmittel in einer Polymermatrix, sowie gegebenfalls das oberflächenmodifizierende Reagenz enthält, können Folien mit erheblich verbesserten Eigenschaften hergestellt werden. Als Silikate sind insbesondere solche bevorzugt, deren Brechungsindex mit dem des jeweils verwendeten Polyalkylens nahezu identisch ist. Es wurde nämlich gefunden, daß Masterbatche, die Silikate mit einem der Polymermatrix ähnlichen Brechungsindex enthalten, zu besseren optischen Eigenschaften bei den damit hergestellten Folien führen. So ist beispielsweise bei der Verwendung von Polypropylen Natrium-Calcium-Aluminiumsilikat oder Aluminiumsilikat insbesondere bevorzugt. Die folgende Tabelle 1 zeigt den Brechungsindex für verschiedene Materialien:

**Tabelle 1**

| Substanz | Brechungsindex |
|---|---|
| Polypropylen | 1,49 |
| Siliciumdioxid | 1,44 |
| Talkum | 1,56 |
| Na-Ca-Al-silikat | 1.50 |
| Aluminiumsilikat | 1,62 |

Die folgenden Beispiele sollen die Erfindung näher erläutern:

### Beispiele

### Beispiele 1 bis 3, Vergleichsbeispiele 1 und 2

In den folgenden Beispielen 1 bis 3 wurden erfindungsgemäße Masterbatche hergestellt und auf Ihre Eigenschaften in den fertigen Produkten getestet. Die folgende Tabelle 2 zeigt einige Beispiele von Mischungen die auf einer ZSK 30, Werner Pfleiderer Compoundiervorrichtung, hergestellt wurden. Die einzelnen Komponenten wurden gemischt, geschmolzen, compoundiert und anschließend abgekühlt und granuliert. Alle Angaben in der folgenden Tabelle sind in Gew%. Die Matrixadhäsion wurde mit einem Rasterelektronenmikroskop ermittelt.

**Tabelle 2**

| Substanz | V1 | V2 | 1 | 2 | 3 |
|---|---|---|---|---|---|
| PP-Homopolymer | 95 | - | 90 | - | - |
| PP-Random-Copolymer | - | 95 | - | 90 | 90 |
| Na-Ca-Aluminiumsilikat | 5 | 5 | 5 | 5 | 5 |
| PP mit 1 % MAH gepfropft | - | - | 5 | 5 | - |
| EAA | - | - | - | - | 5 |
| Matrixadhäsion | B | B | E | E | E |
| PP = Polypropylen | | | | | |
| V = Vergleichsbeispiel | | | | | |
| MAH = Maleinsäureanhydrid | | | | | |
| EAA = Ethylen-Acrylsäure-Copolymer | | | | | |
| B = schlecht | | | | | |
| E = gut | | | | | |

Aus den Beispielen ist zu ersehen, daß bei Verwendung einer Polypropylenmatrix mit kugelförmigen Silikaten allein ohne ein oberflächenaktivierendes Reagenz, eine nur schlechte Matrixadhäsion erreicht wird. Dagegen ist die Matrixadhäsion bei der Verwendung von oberflächenaktivierenden Reagenzien erheblich verbessert.

### Beispiele 4 und 5, Vergleichsbeispiele 3 bis 6

Es wird eine biaxial orientierte Polypropylenfolie hergestellt. Eine 20 µm dicke, koextrudierte Homopolymerfolie mit einer Homopolymer-Außenschicht von 1 µm Durchmesser, enthält verschiedene Antiblockmittel. Als Antiblockmittel wurde verwendet ein 5 Gew% konzentrierter Masterbatch, der in 3 Gew% iger Konzentration hinzugesetzt wurde, so daß die endgültige Zugabe zur Außenschicht 1500 ppm beträgt. In Vergleichsbeispiel 6 wurde ein Aluminiumsilikat in Form hohler, kugelförmiger Teilchen verwendet. In Beispiel 4 wurde ein massives kugelförmiges Na-Ca-Aluminiumsilikat und in Beispiel 5 ein mit Maleinsäureanhydrid gepfropftes Na-Ca-Aluminiumsilikat eingesetzt.

Aus der folgenden Tabelle 3 sind die Eigenschaften der so hergestellten Filme in Abhängigkeit von den verwendeten Silikaten im Masterbatch zu entnehmen.

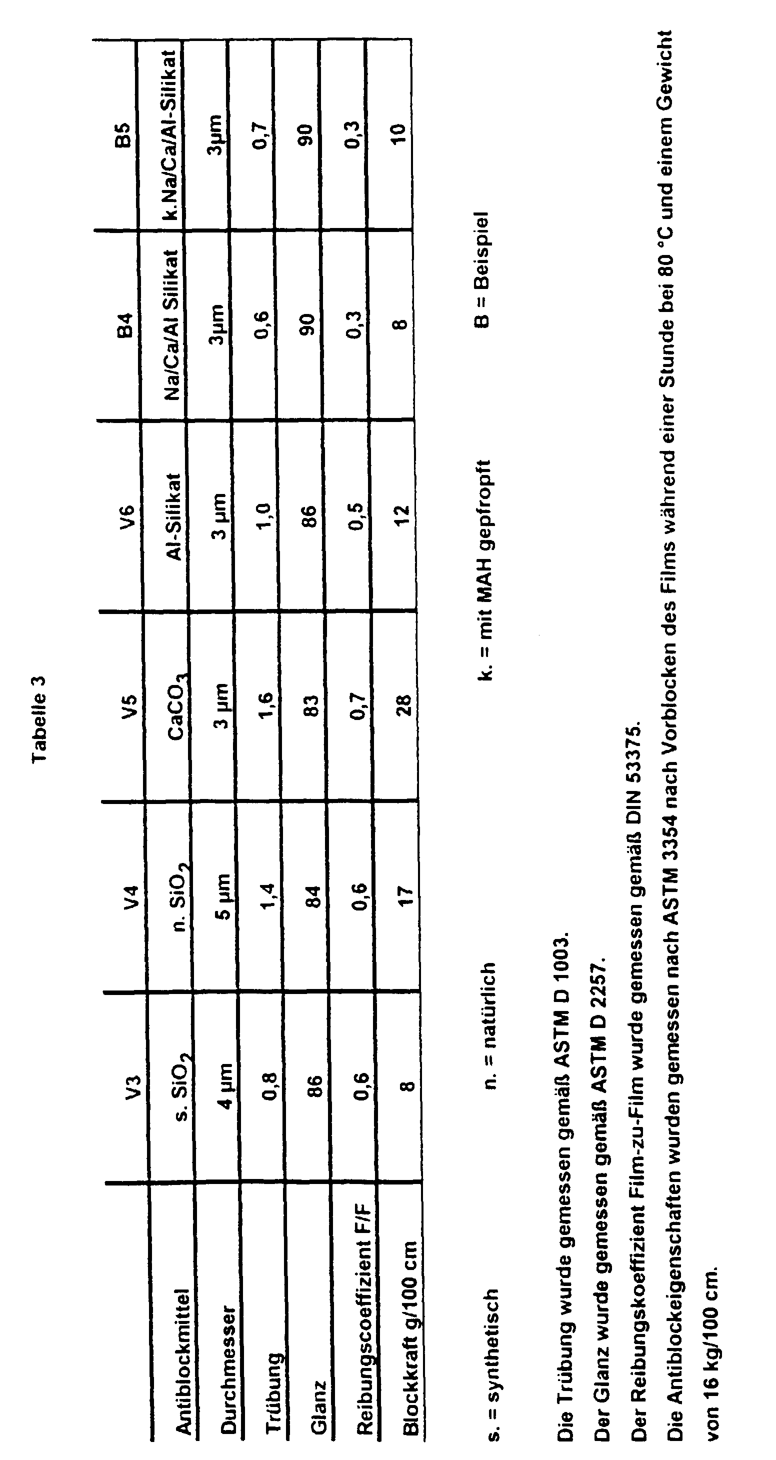

Aus der Tabelle 3 ist zu entnehmen, daß bei Verwendung von kugelförmigen, massiven Silikatteilchen gegenüber hohlen, kugelförmigen Silikatteilchen gute Ergebnisse auch ohne ein oberflächenaktivierendes Mittel erzielt werden (s. Beispiel 4). Eine weitere Steigerung der Eigenschaften der Folien kann jedoch dadurch erreicht werden, daß zusätzlich das Silikat mit einem oberflächenaktivierenden Mittel an die Polymermatrix gekoppelt ist (s. Beispiel 5).

## Patentansprüche

1. Masterbatch zur Herstellung von biaxial orientierten Polyalkylenfolien enthaltend in einer Matrix aus Polyalkylen-Homopolymer oder -Copolymer bezogen auf die Gesamtmenge 1 bis 50 Gew% kugelförmige, massive Silikatteilchen.

2. Masterbatch nach Anspruch 1, dadurch gekennzeichnet, daß zusätzlich 0,1 bis 15 Gew% eines oberflächenmodifizierenden Reagenzes, das mit der Oberfläche des Silikates reagiert und die Haftfestigkeit zwischen Silikat und Polyalkylen verbessert, enthalten ist.

3. Masterbatch nach Anspruch 1 oder 2 dadurch gekennzeichnet, daß das Masterbatch als Matrix ein Polypropylen-Homo oder -Random-Copolymer enthält.

4. Masterbatch nach Anspruch 1 bis 3 dadurch gekennzeichnet, daß 1 bis 10 Gew% kugelförmiges Silikat und 0,1 bis 10 Gew% eines oberflächenmodifizierenden Reagenzes enthalten sind.

5. Masterbatch nach den Ansprüchen 1 bis 4 dadurch gekennzeichnet, daß das oberflächenmodifizierende Reagenz ausgewählt ist aus der Gruppe Polypropylen, Polyethylen niedriger oder hoher Dichte jeweils mit 0,5 bis 2 Gew% gepfropftem Maleinsäureanhydrid oder einem Ethylen-Acrylsäure-Copolymer.

6. Masterbatch nach Ansprüchen 1 bis 5 dadurch gekennzeichnet, daß die Silikatteilchen einen Teilchendurchmesser von 2 bis 4 µm besitzen.

7. Masterbatch nach Ansprüchen 1 bis 6 dadurch gekennzeichnet, daß als Silikat ein Natrium-Calcium-Aluminiumsilikat, ein Kalium-Calcium-Aluminiumsilikat oder ein Aluminiumsilikat eingesetzt wird.

8. Verfahren zur Herstellung des Masterbatches gemäß Ansprüchen 1 bis 7 dadurch gekennzeichnet, daß Polyalkylen in einer Compoundiervorrichtung mit dem oberflächenmodifizierenden Reagenz gemischt, geschmolzen und nach dem Abkühlen granuliert wird.

9. Verwendung des Masterbatches gemäß Ansprüchen 1 bis 8 zur Herstellung von biaxial orientierten Polyalkylenfolien.

10. Biaxial orientierte, koextrudierte Mehrschichtpolyalkylenfolie mit einer Dicke von 5 bis 200 µm und bestehend aus einer Kern- und einer oder mehrerer Außenschichten enthaltend in der Außenschicht das Masterbatch gemäß Ansprüchen 1 bis 7.

11. Mehrschichtpolyalkylenfolie gemäß Anspruch 10 dadurch gekennzeichnet, daß die Außenschicht eine Dicke von 0,25 bis 5 µm besitzt.

12. Mehrschichtpolyalkylenfolie gemäß Ansprüchen 10 oder 11 dadurch gekennzeichnet, daß sie in der Außenschicht 1 bis 10 Gew% des Masterbatches nach Ansprüchen 1 bis 7 enthält.

13. Mehrschichtpolyalkylenfolie gemäß Ansprüchen 10 bis 12 dadurch gekennzeichnet, daß die Außenschicht aus Polypropylen-Homopolymer oder -Random-Copolymer besteht.

## Claims

1. A masterbatch for the production of biaxially oriented polyalkylene films, which, relative to the total amount, contains from 1 to 50 wt.-% of spherical, massive silicate particles in a matrix of a polyalkylene homopolymer or copolymer.

2. The masterbatch as claimed in claim 1, characterized in that from 0.1 to 15 wt.-% of a surface-modifying reagent reacting with the surface of the silicate and improving the adherence between silicate and polyalkylene is included in addition.

3. The masterbatch as claimed in claim 1 or 2, characterized in that the masterbatch contains a polypropylene homopolymer or random copolymer as matrix.

4. The masterbatch as claimed in claims 1 to 3, characterized in that from 1 to 10 wt.-% of a spherical silicate and from 0.1 to 10 wt.-% of a surface-modifying reagent are included.

5. The masterbatch as claimed in claims 1 to 4, characterized in that the surface-modifying reagent is selected from the group of polypropylene, polyethylene of low or high density, each with from 0.5 to 2 wt.-% of grafted maleic anhydride or an ethylene/acrylic acid copolymer.

6. The masterbatch as claimed in claims 1 to 5, characterized in that the silicate particles have a particle diameter of from 2 to 4 µm.

7. The masterbatch as claimed in claims 1 to 6, characterized in that a sodium calcium aluminum silicate, a potassium calcium aluminum silicate or an aluminum silicate is employed as silicate.

8. A process for the production of the masterbatch as claimed in claims 1 to 7, characterized in that a polyalkylene in a compounding apparatus is mixed with the surface-modifying reagent, melted and granulated after cooling.

9. Use of the masterbatch as claimed in claims 1 to 8 in the production of biaxially oriented polyalkylene films.

10. A biaxially oriented, co-extruded multilayer polyalkylene film having a thickness of from 5 to 200 µm and consisting of a core layer and one or more external layers, containing the masterbatch according to claims 1 to 7 in the external layer.

11. The multilayer polyalkylene film as claimed in claim 10, characterized in that the external layer has a thickness of from 0.25 to 5 µm.

12. The multilayer polyalkylene film as claimed in claim 10 or 11, characterized in that it contains from 1 to 10 wt.-% of the masterbatch according to claims 1 to 7 in the external layer.

13. The multilayer polyalkylene film as claimed in claims 10 to 12, characterized in that the external layer consists of a polypropylene homopolymer or random copolymer.

## Revendications

1. Mélange-maître pour la fabrication de feuilles de polyalkylène orientées de façon biaxe, contenant dans une matrice d'homopolymère polyalkylène ou copolymère polyalkyléne par rapport à la quantité totale entre 1 et 50% en poids de particules de silicate massives sphériques.

2. Mélange-maître selon la revendication 1, caractérisé par le fait qu'entre 0,1 et 15% en poids d'un réactif modifiant la surface, qui entre en réaction avec la surface du silicate et améliore l'adhérence entre le silicate et le polyalkylène, est en sus contenu.

3. Mélange-maître selon la revendication 1 ou 2, caractérisé par le fait que le mélange-maître contient en tant que matrice un homopolymère polypropylène ou copolymère aléatoire de polypropylène.

4. Mélange-maître selon la revendication 1 à 3, caractérisé par le fait qu'entre 1 et 10% en poids de silicate sphérique et entre 0,1 et 10% en poids d'un réactif modifiant la surface sont contenus.

5. Mélange-maître selon les revendications 1 à 4, caractérisé par le fait que le réactif modifiant la surface est choisi dans le groupe polypropylène, polyéthylène de densité faible ou élevée respectivement avec 0,5 à 2% en poids d'anhydride greffé de l'acide maléique ou d'un copolymère d'acide acrylique-éthylène.

6. Mélange-maître selon les revendications 1 à 5, caractérisé par le fait que les particules de silicate possèdent un diamètre de particule compris entre 2 et 4 µm.

7. Mélange-maître selon les revendications 1 à 6, caractérisé par le fait que l'on utilise en tant que silicate un silicate d'aluminium-calcium-sodium, un silicate d'aluminium-calcium-potassium ou un silicate d'aluminium.

8. Procédé de fabrication du mélange-maître selon les revendications 1 à 7, caractérisé par le fait que du polyalkylène est mélangé avec le réactif modifiant la surface dans un dispositif de compoundage, est fondu et granulé après le refroidissement.

9. Utilisation du mélange-maître selon les revendications 1 à 8 pour la fabrication de feuilles de polyalkyléne orientées de façon biaxe.

10. Feuille de polyalkylène à plusieurs couches coextrudée, orientée de façon biaxe ayant une épaisseur comprise entre 5 et 200 µm et se composant d'une couche noyau et d'une ou de plusieurs couches extérieures, comprenant dans la couche extérieure le mélange-maître selon les revendications 1 à 7.

11. Feuille de polyalkyléne à plusieurs couches selon la revendication 10, caractérisée par le fait que la couche extérieure présente une épaisseur comprise entre 0,25 et 5 µm.

12. Feuille de polyalkylène à plusieurs couches selon les revendications 10 ou 11, caractérisée par le fait qu'elle contient dans la couche extérieure entre 1 et 10% en poids du mélange-maître selon les revendications 1 à 7.

13. Feuille de polyalkylène à plusieurs couches selon les revendications 10 à 12, caractérisée par le fait que la couche extérieure se compose d'homopolymère polypropylène ou de copolymère aléatoire de polypropylène.
